# EUROPÄISCHE PATENTSCHRIFT

(11) **EP 1 752 742 B1**
(45) Veröffentlichungstag und Bekanntmachung des Hinweises auf die Patenterteilung: **11.03.2015**
(21) Anmeldenummer: 05017582.7
(22) Anmeldetag: 12.08.2005
(51) Int. Cl.: G01D 11/30, G01D 5/347

(54) **Sensorelement für ein Längenmesssystem und Montageverfahren dafür**
Sensor element for a length measuring system and assembling method for the same
Capteur pour système de mesure de longueur et son procédé de montage

(43) Veröffentlichungstag der Anmeldung: 14.02.2007
(73) Patentinhaber: Dr. Johannes Heidenhain GmbH, 83301 Traunreut (DE)
(72) Erfinder: Böge, Ludwig, 07751 Jena OT Jenapriessnitz/Wogau (DE); Franz, Heinz-Günther, 22359 Hamburg (DE); Freitag, Hans-Joachim, Dr., 99084 Erfurt (DE); Schmidt, Andreas, 99089 Erfurt (DE)

(56) Entgegenhaltungen:
- DE-A1- 10 249 884
- US-A- 3 833 303
- US-A- 4 031 595

## Beschreibung

Die Erfindung betrifft ein Sensorelement für ein Messsystem zur Erfassung einer Längsbewegung eines ersten Bauteils gegenüber einem zweiten Bauteil, mit einem einen Befestigungsabschnitt aufweisenden Abtastkopf, dessen Befestigungsabschnitt auch als ein eigenes Bauteil ausgeführt sein kann, und einer davon abgefühlten Maßverkörperung, wobei der Abtastkopf mit dem Befestigungsabschnitt an einer Anbaufläche des ersten Bauteils und die Maßverkörperung an einer Montagefläche des zweiten Bauteils befestigbar ist und der Befestigungsabschnitt und die Maßverkörperung in einem zur Endmontage vorbereiteten Zustand vorjustiert und unmittelbar oder mittelbar lösbar miteinander verbunden sind, damit der Abtastkopf die Maßverkörperung nach Lösen der Verbindung, die die Vorjustierung aufrechterhält, im endmontierten Zustand berührungsfrei abfühlt. Die Erfindung betrifft außerdem ein Verfahren zur Befestigung eines derartigen Sensorelements. Ein solches Verfahren ist aus dem Dokument US-A-3 833 303 bekannt.

Ein derartiges Längenmesssystem ist bereits aus der DE 102 49 884 A1 bekannt. Das dortige Längenmesssystem umfasst ebenfalls einen Abtastkopf und einen davon abgefühlten Messstab, wobei in der Endmontage des Längenmesssystems der Abtastkopf fest an einem ersten Maschinenteil anbringbar und der Messstab mit einem zweiten Maschinenteil verbindbar ist. Der Messstab ist in einem Profilteil befestigt, dass seinerseits im Endzustand fest am zweiten Maschinenteil angebracht ist und in das der Abtastkopf einsteht. In einem zur Endmontage vorbereiteten Zustand ist der Abtastkopf über ein entfernbares Montageelement vorjustiert und lösbar mit dem Profilteil verbunden, oder der Abtastkopf steht im endmontierten Zustand in das Profilteil ein, ohne sich daran abzustützen. Dieses Längenmesssystem hat sich bereits in vielen Einsatzfällen bewährt. Komplikationen können jedoch dann auftreten, wenn die Montageflächen an dem ersten bzw. an dem zweiten Maschinenteil, an denen die Bestandteile des Längenmesssystems montiert werden sollen, eine unerwünschte Abweichung von einem Sollzustand aufweisen, von dem für die Montage des Längenmesssystems ausgegangen wird. Die Abweichung resultiert in einem meist keilförmigen Spalt zwischen der Montagefläche und einer zugeordneten Anbaufläche am Längenmesssystem, der bei der Montage des Längenmesssystems zu einer Dejustage des Abtastkopfes gegenüber dem Messstab führen kann.

Es ist daher Aufgabe der vorliegenden Erfindung, ein Längenmesssystem der eingangs genannten Art und ein Montageverfahren dafür anzugeben, bei dem Abweichungen eines Ist-Zustands besagter Montageflächen gegenüber einem für die Montage wünschenswerten Sollzustandes im Wesentlichen unwirksam bleiben.

Zur Lösung dieser Aufgabe ist bei dem eingangs genannten Messsystem am Befestigungsabschnitt wenigstens ein kraftaktivierbares Mittel zur Überbrückung eines eventuell auftretenden Spaltes zwischen dem Befestigungsabschnitt einerseits und der zugeordneten Anbaufläche des ersten Bauteils andererseits angeordnet, wobei das Mittel eine Einrichtung zur Beschränkung der Aktivierungskraft aufweist. Die Erfindung wendet sich also davon ab, eine Abweichung zwischen der Soll- und Ist-Lage der Montageflächen unberücksichtigt zu lassen, weil dies bei geringeren Abweichungen zu Messungenauigkeit und bei größeren Abweichungen sogar zur Beschädigung des Messsystems führen kann. Sie verfolgt andererseits auch bewusst nicht den Ansatz, einen durch Abweichungen zwischen Soll- und Ist-Lage entstehenden Spalt zum Beispiel durch selbstaushärtende Stoffe zu füllen, weil derartige Füller, meist Klebstoff, wenig komfortabel verarbeitet werden können. Die Erfindung erfolgt vielmehr das Prinzip, den Spalt durch Einrücken oder Einschieben eines Mittels, zum Beispiel eines Keils, eines Stifts oder einer Schraube, zu überbrücken. Dadurch wird eine Druck- bzw. Stützkraft zwischen dem Befestigungsabschnitt einerseits und der Anbaufläche andererseits hervorgerufen. Sie ist nicht zu verwechseln mit der Aktivierungskraft des Mittels, die je nach Konstruktionsprinzip des kraftaktivierbaren Mittels eine Druck- oder Zugkraft oder ein Drehmoment sein kann. Das Prinzip der Kraftaktivierung des Mittels bietet nämlich den Vorteil, dass über die Beschränkung der Aktivierungskraft eine exakte Definition der Größe der gewünschten Stützkraft vorgenommen werden kann. Die Beschränkung der Größe der Stützkraft ist erforderlich, um einerseits durch die Stützkraft die vorjustierte Lage zwischen Abtastkopf und Maßverkörperung nicht zu verändern, und andererseits, um eine der Stützkraft entgegenwirkende Befestigungskraft ebenfalls hinsichtlich ihrer Größe definieren zu können.

Das kraftaktivierbare Mittel dient erfindungsgemäß also zur Erzeugung einer Stützkraft, der zur Befestigung des Abtastkopfes eine Befestigungskraft entgegenwirkt. Für eine dauerhafte lagegerechte Befestigung ist daher die dauerhafte Wirkung sowohl der Stützkraft als auch der Befestigungskraft erforderlich. Nach einer vorteilhaften Ausgestaltung der Erfindung lässt daher die Einrichtung zur Beschränkung der Aktivierungskraft eine Betätigung nur in Aktivierungsrichtung zu. Sie erreicht es dadurch, dass die Einrichtung nach ihrer Aktivierung gegen ein Lösen des Mittels gesperrt ist. Dies hat zur Folge, dass die aktivierte Stellung des Mittels irreversibel ist. Dadurch ist sichergestellt, dass die Stützkraft, sei es bei der Montage oder sei es im späteren Betrieb des Messsystems, nicht versehentlich reduziert oder gar deaktiviert wird. Es wird also die dauerhafte Einwirkung der Aktivierungskraft sichergestellt.

Wie bereits oben dargelegt, beruht die Befestigung auf einem Gleichgewicht einander entgegengesetzt gerichteter Kräfte, nämlich der Stützkraft und der Befestigungskraft. Nach einer weiteren vorteilhaften Ausgestaltung der Erfindung weist das Mittel ein durch die Aktivierungskraft ausfahrbares Stützelement auf, das mit einem der Ausfahrrichtung entgegengesetzt wirkendem Zugelement zur Befestigung des Befestigungsabschnitts zusammenwirkt. Die Anordnung von separaten Einrichtungen für das Stützelement und das Zugelement macht die Befestigung zum einen konstruktiv einfacher und zum anderen auch für einen Monteur nachvollziehbarer und damit leichter kontrollierbar.

Das Mittel weist erfindungsgemäß eine Einrichtung zur Beschränkung der Aktivierungskraft auf, damit das Messsystem bei der Montage nicht deformiert und dadurch dejustiert wird. In seiner Ausbildung als Stützelement kann das Mittel einen Schaftabschnitt zur Spaltüberbrückung und einen Kopfabschnitt zum Aufbringen der Aktivierungskraft aufweisen. Nach einer derartigen vorteilhaften Ausgestaltung der Erfindung ist zwischen dem Schaftabschnitt des Mittels und seinem Kopfabschnitt eine Rutschkupplung als Einrichtung zur Beschränkung der Aktivierungskraft angeordnet. Durch die Konstruktion bzw. die Auslegung der Rutschkupplung ist es möglich, die maximale Größe der Aktivierungskraft und damit die ihr zugeordnete Stützkraft genau zu definieren, um eine Beschädigung des Messsystems auszuschließen.

Nach einer weiteren vorteilhaften Ausgestaltung der Erfindung umfasst das ausfahrbare Stützelement eine Schraube mit einem Schraubenkopf als Kopfabschnitt, einem Schraubenschaft als Schaftabschnitt und einer Rutschkupplung zur Drehmomentbegrenzung. Die Ausbildung des ausfahrbaren Stützelements als Schraube bietet den Vorteil, dass es einfach bedient und - ohne dass seine Aktivierung näher erläutert werden müsste - mit gängigem Werkzeug in Betrieb genommen werden kann. Dadurch wird die Montage des Messsystems vereinfacht. Über die Rutschkupplung, die eine Begrenzung der Aktivierungskraft bewirkt, ist zudem die vorgenommene aktivierte Stellung der Einrichtung irreversibel festgelegt, da sie nicht mehr verändert werden kann.

Das Prinzip einer Rutschkupplung beruht darauf, dass eine Flächenpaarung mit einer definierten Andruckkraft aneinander gepresst wird, so dass sie in Abhängigkeit von einem Reibbeiwert der Flächenpaarung eine genau bestimmbare Außenkraft übertragen kann. Nach einer konkreten Ausgestaltung dieses Prinzips ist die Rutschkupplung dadurch verwirklicht, dass entweder der Schraubenkopf oder der Schraubenschaft in einer Schraubenlängsrichtung abstehende Federbacken aufweist, die reibschlüssig an Innenmantelflächen einer zylindrischen Bohrung entweder im Schraubenschaft oder im Schraubenkopf anliegen. Durch die Abmessungen der zylindrischen Bohrung einerseits und die Konstruktion der Federbacken andererseits kann also die Andruckkraft definiert werden. Der Reibbeiwert der Flächenpaarung aus der Oberfläche der Federbacken einerseits und der Innenmantelflächen der zylindrischen Bohrung andererseits lässt sich zum Beispiel durch die Materialwahl bzw. der Oberflächenbeschaffenheit der Federbacken und der Innenmantelflächen definieren. Dadurch ist eine einfache Rutschkupplung realisierbar. Bei Ausführung als radial wirkende Rutschkupplung ist zum einen eine wegunabhängige Drehmomentbegrenzung erreicht und kann zum anderen eine besonders kompakte Bauweise realisiert werden, die sich besonders für räumlich beengte Verhältnisse eignet.

Nach einer dazu alternativen Ausgestaltung der Erfindung ist die Einrichtung zur Beschränkung der Aktivierungskraft dadurch verwirklicht, dass zwischen dem Schaftabschnitt und dem Kopfabschnitt eine Drehfeder ohne eine Zug- bzw. Druckfeder oder eine Sollbruchstelle angeordnet ist. Auch dadurch sind einfache Konstruktionen für Einrichtungen zur Beschränkung der Aktivierungskraft angegeben. Denn in Abhängigkeit von der Größe der Aktivierungskraft gibt die Feder nach bzw. versagt die Sollbruchstelle nach Überschreiten eines vorbestimmten Grenzwertes. Damit ist nicht nur eine zuverlässige Beschränkung der Aktivierungskraft sichergestellt.

Die Ausbildung einer Sollbruchstelle zur Beschränkung der Aktivierungskraft nutzt ein Materialversagen. Dies kann dadurch herbeigeführt werden, dass zum Beispiel an einem Schraubenschaft eines schraubenförmigen Stützelements zwischen dessen Schaftabschnitt und dessen Kopfabschnitt eine Materialverjüngung ausgebildet ist. Nach Überschreiten eines Grenzwertes der Aktivierungskraft treten das Materialversagen und damit eine dauerhafte Trennung des Schaftabschnitts vom Kopfabschnitt ein. Alternativ dazu kann das Stützelement aus einer Schraube als Kopfabschnitt bestehen, die in ein Innengewinde einer Buchse als Schaftabschnitt eingedreht wird. Die Sollbruchstelle kann dann darin bestehen, dass die Buchse als ein ausreißbarer Schraubeneinsatz ausgebildet ist. Auch hier ist die Aktivierung irreversibel.

Ein - wenn auch gewolltes - Versagen einer Sollbruchstelle oder das Durchrutschen der Rutschkupplung mit einem Durchdrehen des Kopfabschnitts infolgedessen bei der Montage des schraubenförmigen Stützelements kann zu einer Verunsicherung des Monteurs führen. Denn beim Anziehen einer Schraube wird im Allgemeinen ein festes Anziehen erwartet. Um ein Anziehen des Kopfabschnitts zu ermöglichen und die Montage des Stützelements in dieser Hinsicht zu vereinfachen, weist der Kopfabschnitt eine begrenzte Einschraublänge auf. Sie bewirkt, dass der Kopfabschnitt jedenfalls festgezogen werden kann. Unabhängig davon wird die Aktivierungskraft aufgebracht und infolge zum Beispiel der Rutschkupplung beschränkt. Die begrenzte Einschraublänge definiert folglich eine Endstellung des Kopfabschnitts, die von der zur Spaltüberbrückung erforderlichen Aktivierungskraft unabhängig und damit entkoppelt ist. Sie ist also so zu bemessen, dass für das Eindrehen des Kopfabschnitts bis in seine Endstellung gleichviel oder mehr Umdrehungen erforderlich sind, als für das Aktivieren des Schaftabschnitts zum Überbrücken eines maximalen Spaltes.

Wie bereits oben erläutert, wirken sowohl die Stützelemente als auch die Zugelemente bei der Befestigung des Befestigungsabschnitts zusammen. Ihre Anordnung nach Zahl und Lage beeinflusst also die Exaktheit der Befestigung. Nach einer weiteren vorteilhaften Ausgestaltung der Erfindung bilden daher mehrere, und zwar zumindest drei Stützelemente zusammen eine Dreipunktauflage zur Definition einer exakten Anlage des Befestigungsabschnitts an der Anbaufläche. In einem einfachen Fall kommen dafür drei Stützelemente, die nicht auf einer Geraden angeordnet sind, zum Einsatz. Aus Gründen der Redundanz kann es jedoch auch sinnvoll sein, mehr als drei Stützelemente anzuordnen, um eine sichere Befestigung auch dann zu gewährleisten, falls ein Stützelement die gewünschte Stützkraft nicht hervorruft oder im Betrieb versagt.

Die eingangs genannte Aufgabe wird außerdem durch ein Verfahren zur Befestigung des Messsystems gelöst, in dem vor der Befestigung des Messsystems an dem zweiten Bauteil zunächst wenigstens ein kraftaktivierbares Mittel zur Überbrückung eines Spalts zwischen dem Messsystem und dem zweiten Bauteil aktiviert wird und das Messsystem anschließend unter Beibehaltung des überbrückten Spalts an dem zweiten Bauteil befestigt wird.

Das Aufbringen der Aktivierungskraft kann einen Grenzwert überschreiten, der eine Dejustierung und damit fehlerhafte Montage des Messsystems zur Folge haben kann. Daher wird bei der Aktivierung des Mittels eine Begrenzung der Aktivierungskraft vorgenommen, vorteilhafterweise durch Ausfahren eines Stützelements. Da der Aktivierunggskraft eine durch das Stützelement hervorgerufene Druckkraft entspricht, wird durch die Begrenzung der Aktivierungskraft sichergestellt, dass die Druckkraft keine Größe annehmen kann, die eine Dejustierung des Messsystems zur Folge haben könnte.

Nach einer weiteren vorteilhaften Ausgestaltung des Montageverfahrens wird der Abtastkopf nach der Aktivierung des Mittels auf das zweite Bauteil hingespannt, wobei das kraftaktivierte Mittel den Abtastkopf abstützt. Da das kraftaktivierte Mittel eine Druckkraft als Stützkraft hervorruft, ist zur Befestigung des Abtastkopfes also eine der Druckkraft entgegengesetzt wirkende Zugkraft erforderlich. Sie wird durch ein Zugelement hervorgerufen, das eine dauerhafte Zugkraft evoziert. Damit ist durch das Aufbringen entgegengesetzt gerichteter Kräfte, nämlich einer Zug- und einer Druckkraft, eine dauerhafte Befestigung des Abtastkopfes am zweiten Bauteil sichergestellt.

Das Prinzip der Erfindung wird im Folgenden anhand von Zeichnungen beispielshalber noch näher erläutert. In den Zeichnungen zeigen:
- Figur 1: einen Schnitt durch ein Messsystem im Lieferzustand und durch eine Maschine, an die das Messsystem montiert werden soll,
- Figur 2: eine Schnittansicht durch ein fehlerhaft montiertes Messsystem an der Maschine,
- Figur 3: einen Montagezustand eines korrekt montierten Messsystems,
- Figur 4: eine Frontansicht auf das Messsystem der Figur 3,
- Figur 5: einen weiteren fehlerhaften Montagezustand des Messsystems in einer Schnittansicht,
- Figur 6: den Vorgang der Montage des Messsystems und
- Figur 7a, 7b: Detailansichten der Stützschrauben des Messsystems

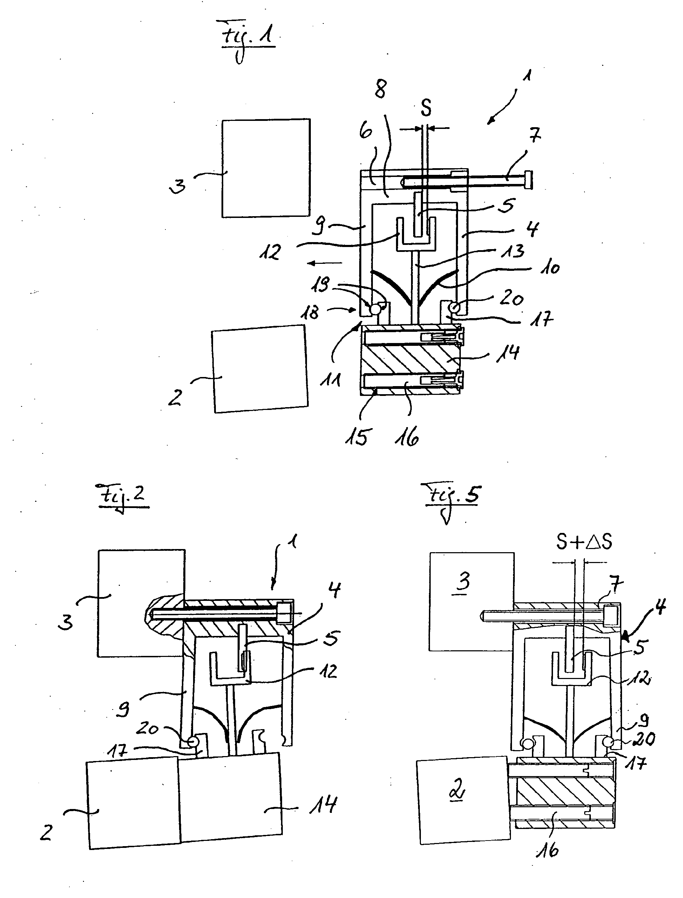

Figur 1 zeigt eine Schnittdarstellung eines Längenmesssystems 1 in seinem Lieferzustand. Es dient dazu, eine Relativbewegung eines Maschinenbetts 2 gegenüber einem Maschinenkopf 3 zu erfassen. Das Längenmesssystem 1 umfasst ein Kapselprofil 4, in dem ein Messstab 5 als Maßverkörperung gehaltert ist. In einem oberen Abschnitt des Kapselprofils 4 ist eine Buchse 6 angeordnet, die eine Schraube 7 zur Befestigung des Kapselprofils 4 am Maschinenkopf 3 aufnimmt.

Das Kapselprofil 4 weist einen U-förmigen Querschnitt mit einer Basis 8 und zwei Schenkeln 9 auf. Das Kapselprofil 4 ist derart orientiert, dass die Öffnungsseite 11 seines U-förmigen Querschnitts nach unten gerichtet ist. Gegen das Eindringen von Staub ist die Öffnungsseite 11 des Kapselprofils 4 mit einander gegenüberliegenden Reihen an Dichtlippen 10 verschlossen. Sie sind an den Innenseiten der Schenkel 9 befestigt und stehen derart in Richtung der Öffnungsseite 11 des Kapselprofils 4 ab, dass sie sich in einem Endbereich gegenseitig berühren.

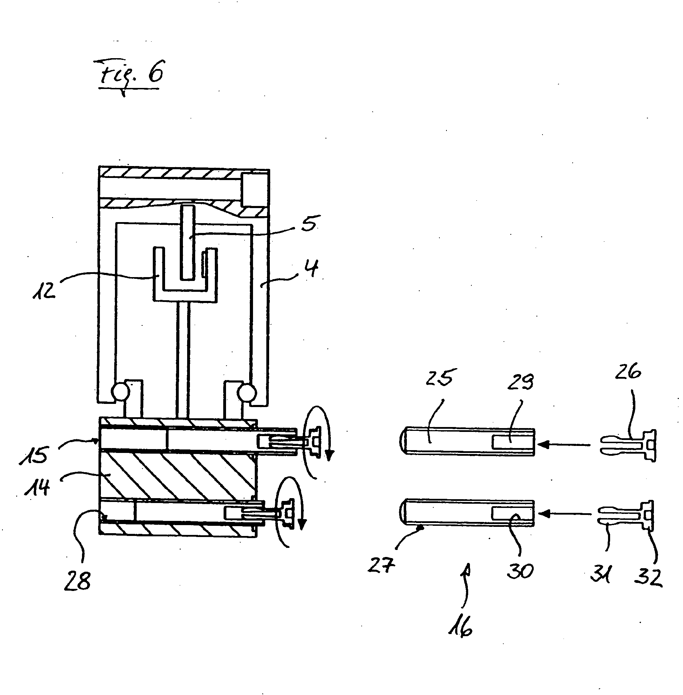

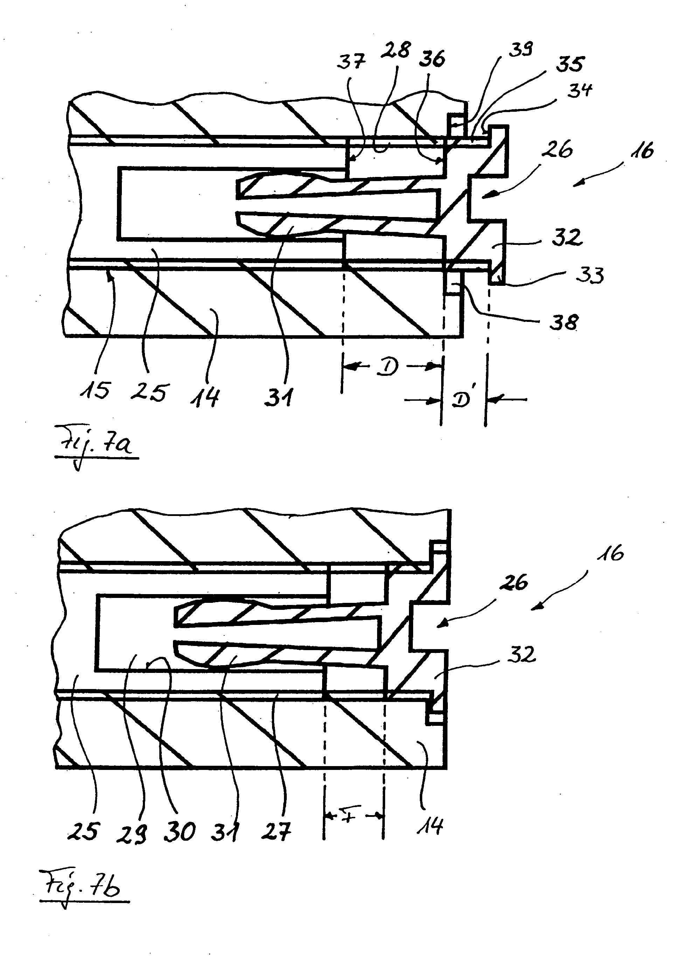

Von der Öffnungsseite 11 des Kapselprofils 4 her ragt ein Abtastkopf 12 in das Kapselprofil 4 hinein, der den Messstab 5 abfühlt. Er ist über einen steifen Haltearm 13, der durch die Dichtlippen 10 hindurchragt, mit einem Befestigungsabschnitt 14 starr verbunden. Der Befestigungsabschnitt dient dazu, den Abtastkopf 12 mit dem Maschinenbett 2 zu verbinden. Dazu durchdringen ihn horizontale Querbohrungen 15, in die Stützschrauben 16 eingesetzt sind. Der Aufbau und die Funktionsweise der Stützschrauben 16 werden später in den Figuren 6 und 7 näher erläutert.

Der Befestigungsabschnitt 14 weist auf seiner dem Kapselprofil 4 zugewandten Seite Halter 17 auf, die von der Öffnungsseite 11 her in das Kapselprofil 4 hineinragen. Dadurch entsteht ein Überdeckungsbereich 18, in dem die Schenkel 9 in einer Seitenansicht die Halter 17 überdekken. Im Überdeckungsbereich 18 sind innenseitig an den Schenkel 9 und außenseitig an den Haltern 17 Nuten 19 eingefräst, in denen Spangen 20 im Klemmsitz eingesetzt sind. Über diese Verbindung werden das Kapselprofil 4 und der Abtastkopf 12 in einem Lieferzustand des Längenmesssystems 1, den Figur 1 darstellt, in einer definierten und für die korrekte Funktion des Längenmesssystems 1 erforderlichen Lage gehalten. In dieser Lage soll das Längenmesssystem 1 an dem Maschinenkopf 3 bzw. dem Maschinenbett 2 befestigt werden. Insbesondere wird dadurch ein Spaltmaß S zwischen dem Messstab 5 und dem Abtastkopf 12 von etwa 0,5 mm sichergestellt.

Sowohl in Figur 1 als auch in Figur 2 weisen das Maschinenbett 2 und der Maschinenkopf 3 eine gegeneinander verkippte Relativlage auf, die eine Montage des Längenmesssystems 1 erschwert. Eine solche Verkippung kann sich zum Beispiel aus Herstellungstoleranzen ergeben. Figur 2 zeigt das Längenmesssystem 1 in einem montierten Zustand, in dem die zueinander verkippte Lage von Maschinenbett 2 und Maschinenkopf 3 nicht berücksichtigt wurden. Maschinenbett 2 und Maschinenkopf 3 sind Beispiele für gegeneinander längsbewegte erste und zweite Maschinenteile. Die für die exakte Funktion des Längenmesssystems 1 erforderliche Lage von Messstab 5 und Abtastkopf 12 zueinander kann so nicht eingehalten werden. Sie kollidieren miteinander, so dass kein störungsfreier Betrieb des Längenmesssystems 1 möglich ist. Zudem wird der linke Schenkel 9 nach außen gebogen, so dass er selbst nach Entnahme der Spange 20 am Halter 17 schleifen würde.

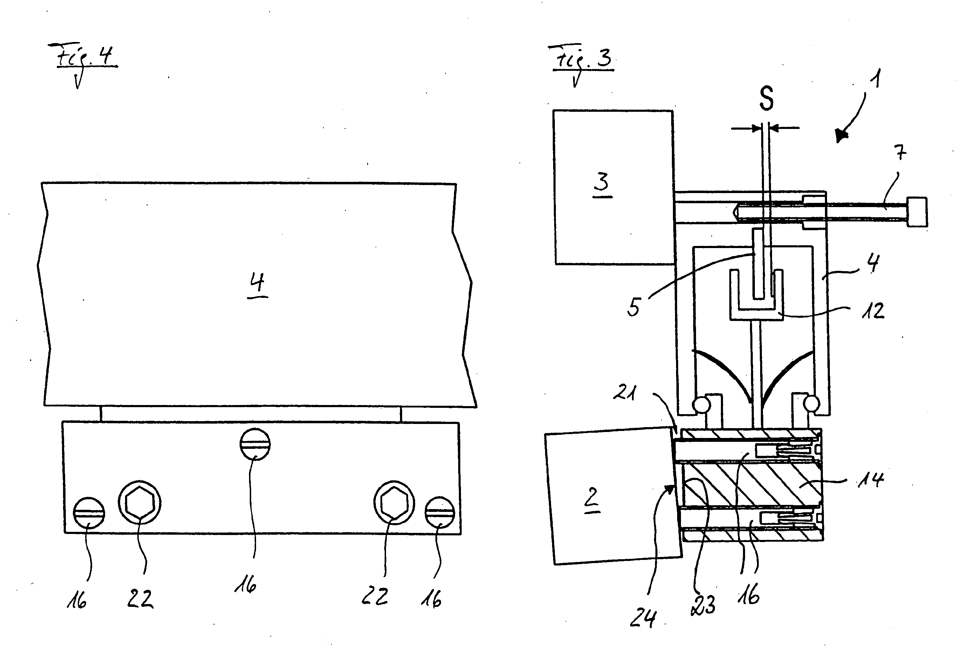

Die korrekte Lage des Längenmesssystems 1 gegenüber dem Maschinenbett 2 und dem Maschinenkopf 3 zeigt die Figur 3. Bei bestimmungsgemäßer Anlage des Kapselprofils 4 am Maschinenkopf 3 entsteht durch die funktionsgerechte Vorjustierung des Kapselprofils 4 gegenüber dem Abtastkopf 12 ein Spalt 21 zwischen dem Befestigungsabschnitt 14 und dem Maschinenbett 2. Für ein Funktionieren des Längenmesssystems 1 ist es also erforderlich, den Befestigungsabschnitt 14 unter Beibehaltung des Spalts 21 zwischen Befestigungsabschnitt 14 und Maschinenbett 2 aufrechtzuerhalten. Dazu weist der Befestigungsabschnitt 14 zusätzlich zu den Stützschrauben 16 parallel zu ihnen verlaufende Zugschrauben 22 auf, die in der Seitenansicht der Figur 4 dargestellt sind.

Die korrekte Montage des Längenmesssystems 1 umfasst also zunächst die Befestigung des Kapselprofils 4 über die Befestigungsschraube 7 am Maschinenkopf 3. Das Kapselprofil 4 ist in seiner Lage gegenüber dem Befestigungsabschnitt 14 vorjustiert; bei der vorliegenden Abweichung des Maschinenkopfs 3 bzw. des Maschinenbetts 2 von der idealen Lage ergibt sich zwischen einer Anlagefläche 23 am Befestigungsabschnitt und der ihr zugeordneten Anbaufläche 24 am Maschinenbett 2 der an sich unerwünschte Spalt 21. Er muss, um die vorjustierte Lage zwischen Kapselprofil 4 und dem Befestigungsabschnitt 14 beizubehalten, bei der Montage des Befestigungsabschnitts 14 am Maschinenbett 2 aufrechterhalten werden. Dazu werden in einem weiteren Montageschritt die Stützschrauben 16 so weit ausgefahren, dass sie an der Anbaufläche 24 zur Anlage kommen. Das Ausfahren der Stützschrauben 16 erzeugt also quasi eine die Anlagefläche 23 substituierende Konstruktionsebene, mit der der Befestigungsabschnitt 14 am Maschinenbett 2 zur Anlage kommt. Um diese Konstruktionsebene eindeutig zu definieren, sind die Stützschrauben 16 daher in der Form eines gleichschenkligen Dreiecks zur Ausbildung einer Dreipunktauflage angeordnet.

Die Stützschrauben 16 aktivieren durch Eindrehen und Abstützen am Befestigungsabschnitt 14 eine Druck- bzw. Stützkraft, die einer durch die Zugschrauben 22 hervorgerufenen Zugkraft entgegengerichtet ist. Die Stützkraft ist durch den federnden Schenkel 9 vorgegeben, der die entsprechende Gegenkraft ausübt. Sie hält der Zugkraft das Gleichgewicht, um die vorjustierte Lage des Befestigungsabschnitts 14 nicht zu verändern. Auch die Stützkraft, die während des Montagevorgangs des Längenmesssystems 1 durch die Stützschrauben 16 aufgebracht wird, muss funktionsgerecht dimensioniert sein. Überschreitet sie nämlich einen bestimmten Grenzbetrag, so kann auch durch sie die Vorjustierung des Befestigungsabschnitts 14 gegenüber dem Kapselprofil 4 verloren gehen und der rechte Schenkel 9 des Kapselprofils 4 wird nach außen gebogen. Einen derartigen Zustand zeigt Figur 5. Die Stützschrauben 16 sind zu weit eingedreht, rufen also eine zu große Stützkraft hervor. Durch Verformung des federnden Schenkels 9 weist der Spalt zwischen Messstab 5 und Abtastkopf 12 einen unzulässig großen Betrag von S + δS auf.

Durch den Aufbau der Stützschrauben 16 ist dafür Sorge getragen, dass sie nicht zu weit eingedreht werden können. Wie in Figur 6 dargestellt, setzen sich die Stützschrauben 16 aus einer Gewindehülse 25 als Schaftabschnitt und einen Klemmkopf 26 als Kopfabschnitt zusammen. Die Gewindehülse 25 weist ein Außengewinde 27 auf, das mit einem Innengewinde 28 in der Querbohrung 15 des Befestigungsabschnitts 14 zusammenwirkt. An ihrer dem Maschinenbett 2 abgewandten Seite weist die Gewindehülse 25 ein Sackloch 29 auf, das eine zylindrische Innenwand 30 umfasst. Der Klemmkopf 26 weist zwei einander gegenüberliegende Federbacken 31 auf, die von einer Schlitzplatte 32 gabelförmig abstehen.

Der Klemmkopf 26 kann in das Sackloch 29 eingesetzt werden, wobei dazu die Federbacken 31 verbogen werden, so dass sie unter einer definierten Andruckkraft gegen die Innenflächen 30 angepresst werden. Die Oberfläche der Federbacken 31 und die Innenfläche 30 bilden ein Reibungspaar, über das Drehmomente bis zu einer bestimmten Obergrenze übertragen werden können. Auf diese Weise ist also in jeder Stützschraube 16 eine Rutschkupplung ausgebildet, die ein auf die Stützschraube 16 aufgebrachtes Aktivierungsmoment M auf einen vorbestimmten Wert beschränkt. Wird nämlich die Stützschraube 16 über die Schlitzplatte 32 aktiviert, also in Drehung versetzt, so übertragen die Federbacken 31 das aufgebrachte Aktivierungsmoment M über die Innenfläche 30 auf die Gewindehülse 25. Durch die Drehung wird die Stützschraube 16 aus dem Befestigungsabschnitt 14 ausgefahren. Kommt sie an der Anbaufläche 24 des Maschinenbetts 2 zur Anlage, so trifft sie dort auf eine wachsende Gegenkraft, die durch die zusammenwirkenden Gewinde 27, 28 als Gegenmoment zum Aktivierungsmoment M wirkt. Befinden sie sich im Gleichgewicht, so dreht der Klemmkopf 26 innerhalb des Sacklochs 29 durch. Dadurch ist die Stützschraube 16 festgelegt, so dass sie keine weitere bzw. größere Stützkraft mehr aufbringen kann. Die vorjustierte Lage des Befestigungsabschnitts 14 gegenüber dem Kapselprofil 4 bleibt auf diese Weise bestimmungsgemäß erhalten. Jetzt werden die Zugschrauben 22 in den Befestigungsabschnitt 14 eingedreht. Sie lassen sich schadlos so weit anziehen, bis die durch sie hervorgerufene Zugkraft im Gleichgewicht steht zu der durch die Stützschrauben 16 aufgebrachte Stützkraft.

Anhand der Figuren 7a und 7b wird das Zusammenwirken der Stützschrauben 16 im Befestigungsabschnitt 14 mit der Gewindehülse 25 näher erläutert. Die Schlitzplatte 32 des Klemmkopfes 26 weist demnach einen Kragen 33 mit einer ringförmigen Anlagefläche 34 auf, die dem Befestigungsabschnitt 14 zugewandt ist. Der Klemmkopf 26 trägt außerdem ein Außengewinde 35, das mit dem Innengewinde 28 der Längsbohrung 15 kämmt. Der Klemmkopf 26 weist schließlich eine Innenfläche 36 auf, von der die Federbacken 31 abstehen und die einer Stirnfläche 37 der Gewindehülse 25 zugewandt ist.

Die Querbohrungen 15 im Befestigungsabschnitt 14 sind von einer Montageseite her mit einer zylinderförmigen Einsenkung 38 versehen. Sie bildet eine ringförmige Sitzfläche 39 aus, die dem Klemmkopf 26 und insbesondere dessen Anlagefläche 34 zugewandt ist. Die Einsenkung 38 reicht zumindest so weit in den Befestigungsabschnitt 14 hinein, dass die Schlitzplatte 32 des Klemmkopfes 26 im Endzustand bündig in dem Befestigungsabschnitt 14 eingesenkt ist. Alternativ zu der dargestellten zylinderförmigen Einsenkung 38 kann sie selbstverständlich auch kegelförmig ausgebildet sein und mit einem kegelförmigen Senkkopf anstelle des dargestellten Klemmkopfes 26 zusammenwirken.

Die Abmessungen der Querbohrung 15, Gewindehülse 25 und des Klemmkopfes 26 sind auf folgende Weise aufeinander abgestimmt: Die Länge der Querbohrung 15 im Verhältnis zur Länge der Gewindehülse 25 ist so bemessen, dass sich eine Längendifferenz der eingedrehten Gewindehülse 25 gegenüber der Querbohrung 15 von D ergibt. Die Differenz D bemisst sich dabei von der Stirnfläche 37 der Gewindehülse 25 bis zur Sitzfläche 39 der Einsenkung 38. Das Außengewinde 35 am Klemmkopf 26 weist eine Gewindelänge D' auf, die sich von der Anlagefläche 34 bis zur Innenfläche 36 erstreckt. Das Verhältnis der Differenz D zur Gewindelänge D' wird grundsätzlich so gewählt, dass D größer als D' ist. Dadurch ist ausgeschlossen, dass bei Eindrehen des Klemmkopfes 26 dessen Innenfläche 36 mit der Stirnfläche 37 in Kontakt kommt. So ist sichergestellt, dass das auf die Gewindehülse 25 einwirkende Drehmoment ausschließlich reibschlüssig zwischen der Innenwand 30 der Gewindehülse und den Federbacken 31 des Klemmkopfes und nicht zusätzlich über die Innenfläche 36 und die Stirnfläche 37 übertragen wird. Andererseits begrenzt die Dimensionierung des Außengewindes 35 am Klemmkopf 26 einen definierten Einschraubweg des Klemmkopfes 26, der zum einen ausreicht, um das erforderliche Drehmoment auf die Gewindehülse 25 zu übertragen und andererseits verhindert, dass der Klemmkopf 26 über seine Innenfläche 36 mit der Gewindehülse 25 zur Anlage kommt und dadurch deren Position unerwünscht verändert.

Einen Endzustand des Klemmkopfes 26 zeigt Figur 7b. Der Klemmkopf 26 ist so weit in den Befestigungsabschnitt 14 eingedreht, dass seine Anlagefläche 34 an der Sitzfläche 39 der Einsenkung 38 zur Anlage kommt. Der Klemmkopf 26 kann also nicht mehr weiter in den Befestigungsabschnitt 14 eingedreht werden. In dieser Position schließt die Schlitzplatte 32 des Klemmkopfes 26 bündig mit dem Befestigungsabschnitt 14 ab. Im maximal eingedrehten Zustand des Klemmkopfes 26 verbleibt ein Abstand F zwischen der Innenfläche 36 des Klemmkopfes 26 und der Stirnfläche 37 der Gewindehülse 25. Er hat die Größe der Differenz aus den Werten D und D'. Da bei korrekter Dimensionierung der Gewindehülse 25 und des Klemmkopfes 26 das Maß für den Abstand F immer größer als Null ist, wird das auf den Klemmkopf 26 aufgebrachte Drehmoment also ausschließlich reibschlüssig über dessen Federbacken 31 und die Innenwand 30 der Gewindehülse 25 übertragen. Damit ist die Montage der Stützschraube 16 gegen Fehler weitgehend geschützt, weil ihr Einschraubweg unabhängig von der zu generierenden Stützkraft definiert ist. Die aktivierbare Stützkraft dagegen ist vom Eindrehen des Klemmkopfes 26 entkoppelt und allein durch die Rutschkupplung definiert. Dadurch bietet die Erfindung infolge einer geringen Fehleranfälligkeit eine hohe Montagesicherheit.

## Patentansprüche

1. Sensorelement eines Messsystems (1) zur Erfassung von Längsbewegungen eines ersten Bauteils (2) gegenüber einem zweiten Bauteil (3), mit einem einen Befestigungsabschnitt (14) aufweisenden Abtastkopf (12) und einer davon abgefühlten Maßverkörperung (5), wobei der Abtastkopf (12) mit dem Befestigungsabschnitt (14) an einer Anbaufläche (24) des ersten Bauteils (2) und die Maßverkörperung (5) an einer Montagefläche des zweiten Bauteils (3) befestigbar ist und der Befestigungsabschnitt (14) und die Maßverkörperung (5) in einem zur Endmontage vorbereiteten Zustand vorjustiert und lösbar miteinander verbunden sind, damit der Abtastkopf (12) die Maßverkörperung (5) nach Lösen dieser Verbindung im endmontierten Zustand berührungsfrei abfühlt, wobei am Befestigungsabschnitt (14) wenigstens ein kraftaktivierbares Mittel (16) zur Überbrückung eines eventuell auftretenden Spaltes (21) zwischen dem Befestigungsabschnitt (14) einerseits und der zugeordneten Anbaufläche (24) des ersten Bauteils (2) andererseits angeordnet ist, **dadurch gekennzeichnet, dass** das Mittel (16) eine Einrichtung (29, 31) zur Beschränkung der Aktivierungskraft aufweist.

2. Sensorelement nach Anspruch 1, **dadurch gekennzeichnet, dass** die Einrichtung (29, 31) nach Aktivierung gegen ein Lösen des Mittels (16) gesperrt ist.

3. Sensorelement nach Anspruch 1 oder 2, **dadurch gekennzeichnet, dass** das Mittel ein durch die Aktivierungskraft ausfahrbares Stützelement (16) aufweist, das mit einem der Ausfahrrichtung entgegengesetzt wirkenden Zugelement (22) zur Befestigung des Befestigungsabschnitts (14) zusammenwirkt

4. Sensorelement nach Anspruch 3 mit einem Stützelement (16), das einen Schaftabschnitt (25) zur Spaltüberbrückung und einen Kopfabschnitt (26) zum Aufbringen der Aktivierungskraft aufweist, **dadurch gekennzeichnet, dass** zwischen dem Schaftabschnitt (25) und dem Kopfabschnitt (26) als Einrichtung zur Beschränkung der Aktivierungskraft eine Rutschkupplung (29, 31) angeordnet ist.

5. Sensorelement nach Anspruch 4, **gekennzeichnet durch** eine Schraube (16) als ausfahrbares Stützelement mit einem Schraubenkopf (26) als Kopfabschnitt, einem Schraubenschaft (25) als Schaftabschnitt und einer Rutschkupplung (29, 31) zur Drehmomentbegrenzung.

6. Sensorelement nach Anspruch 5, **dadurch gekennzeichnet, dass** entweder der Schraubenkopf (26) oder der Schraubenschaft in einer Schraubenlängsrichtung abstehende Federbacken (31) aufweist, die reibschlüssig an Innenmantelflächen (30) einer zylindrischen Bohrung (29) entweder im Schraubenschaft (25) oder im Schraubenkopf anliegen.

7. Sensorelement nach Anspruch 3, mit einem Stützelement (16), das einen Schaftabschnitt (25) zur Spaltüberbrückung und einen Kopfabschnitt (26) zum Aufbringen der Aktivierungskraft aufweist, **dadurch gekennzeichnet, dass** zwischen dem Schaftabschnitt und dem Kopfabschnitt eine Drehfeder oder eine Zug- bzw. Druckfeder oder eine Sollbruchstelle als Einrichtung zur Beschränkung der Aktivierungskraft angeordnet ist.

8. Sensorelement nach Anspruch 6 oder 7, **dadurch gekennzeichnet, dass** der Schraubenkopf (26) zu Erleichterung der Montage eine begrenzte Einschraublänge aufweist.

9. Sensorelement nach einem der Ansprüche 2 bis 9, **dadurch gekennzeichnet, dass** mehrere Stützelemente (16) zusammen zur Definition einer exakten Anlage des Befestigungsabschnitts (14) an der Anbaufläche (24) eine Dreipunktauflage bilden.

10. Verfahren zur Befestigung eines Messsystems (1) zur Erfassung einer Bewegung eines ersten Bauteils (3) gegenüber einem zweiten Bauteil (3), das einen Abtastkopf (12) und eine davon abgefühlte Maßverkörperung (5) umfasst, die in einem vorbereiteten Zustand vorjustiert und lösbar miteinander verbunden sind, wobei zur Endmontage zunächst die Maßverkörperung (5) an einer Montagefläche des ersten Bauteils (2) befestigt, dann der Abtastkopf (12) an einer Anbaufläche (24) des zweiten Bauteils (3) befestigt und daraufhin die Vorjustierung aufgehoben wird, wobei, dass vor der Befestigung des Messsystems (1) an der Anbaufläche (24) zunächst wenigstens ein kraftaktivierbares Mittel zur Überbrückung eines Spaltes zwischen dem Messsystem (1) und dem zweiten Bauteil (3) aktiviert wird und das Messsystem (1) anschließend unter Beibehaltung des überbrückten Spaltes (21) an dem zweiten Bauteil (3) befestigt wird, **dadurch gekennzeichnet, dass** die Aktivierung des Mittels einer Begrenzung der Aktivierungskraft unterliegt.

11. Verfahren nach Anspruch 10, **dadurch gekennzeichnet, dass** der Abtastkopf (12) nach der Aktivierung des Mittels (16) mit dem ersten Bauteil (2) durch dauerhaftes Aufbringen einer Zugkraft verspannt wird , wobei das kraftaktivierte Mittel den Abtastkopf (12) abstützt.

## Claims

1. Sensor element of a measuring system (1) for measuring longitudinal movements of a first component (2) with respect to a second component (3), with a sensing head (12) having a fixing section (14) and a scale (5) read thereby, it being possible for the sensing head (12) to be fixed by the fixing section (14) to an attachment surface (24) of the first component (2), and for the scale (5) to be fixed to a mounting surface of the second component (3), and the fixing section (14) and the scale (5) being pre-adjusted and detachably connected to each other in a state prepared for the final assembly, in order that the sensing head (12) reads the scale (5) without contact in the finally assembled state after this connection has been detached, at least one force-activated means (16) being arranged on the fixing section (14) in order to bridge a gap (21) that may possibly occur between the fixing section (14) on the one hand and the associated attachment surface (24) of the first component (2) on the other hand, **characterized in that** the means (16) has a device (29, 31) for restricting the activation force.

2. Sensor element according to Claim 1, **characterized in that** following activation, the device (29, 31) is blocked against detachment of the means (16).

3. Sensor element according to Claim 1 or 2, **characterized in that** the means has a supporting element (16) which can be extended by the activation force and which interacts with a pulling element (22), acting counter to the extension direction, for fixing the fixing section (14).

4. Sensor element according to Claim 3, having a supporting element (16) which has a shaft section (25) for bridging a gap and a head section (26) for applying the activation force, **characterized in that** a slipping clutch (29, 31) is arranged between the shaft section (25) and the head section (26) as a device for restricting the activation force.

5. Sensor element according to Claim 4, **characterized by** a screw (16) as an extendable supporting element, having a screw head (26) as head section, a screw shaft (25) as shaft section and a slipping clutch (29, 31) for torque limitation.

6. Sensor element according to Claim 5, **characterized in that** either the screw head (26) or the screw shaft has spring jaws (31) which project in a screw longitudinal direction and rest with a frictional fit on inner circumferential surfaces (30) of a cylindrical bore (29) either in the screw shaft (25) or in the screw head.

7. Sensor element according to Claim 3, having a supporting element (16) which has a shaft section (25) for bridging a gap and a head section (26) for applying the activation force, **characterized in that** a torsion spring or a tensile or compression spring or an intended fracture point is arranged between the shaft section and the head section as a device for restricting the activation force.

8. Sensor element according to Claim 6 or 7, **characterized in that** the screw head (26) has a limited screw-in length in order to facilitate the assembly.

9. Sensor element according to one of Claims 2 to 9, **characterized in that** a plurality of supporting elements (16) together form a three-point support in order to define an exact contact of the fixing section (14) on the attachment surface (24).

10. Method for fixing a measuring system (1) for measuring a movement of a first component (3) with respect to a second component (3), which comprises a sensing head (12) and a scale (5) read thereby, which are pre-adjusted and detachably connected to each other in a prepared state, the scale (5) firstly being fixed to an assembly surface of the first component (2) for the purpose of final assembly, then the sensing head (12) being fixed to an attachment surface (24) of the second component (3) and the pre-adjustment then being cancelled, at least one force-activated means for bridging the gap between the measuring system (1) and the second component (3) being activated first, before the fixing of the measuring system (1) to the attachment surface (24), and the measuring system (1) then being fixed to the second component (3) whilst maintaining the bridged gap (21), **characterized in that** the activation of the means is subject to a limitation of the activation force.

11. Method according to Claim 10, **characterized in that**, following the activation of the means (16), the sensing head (12) is clamped to the first component (2) by means of the permanent application of a tensile force, the force-activated means supporting the sensing head (12).

## Revendications

1. Élément de capteur d'un système de mesure (1) servant à la détection de mouvements longitudinaux d'un premier composant (2) par rapport à un deuxième composant (3), avec une tête de palpage (12) comportant une section de fixation (14) et un corps de masse (5) en étant rempli, la tête de palpage (12) pouvant être fixée à la section de fixation (14) au niveau d'une surface en saillie (24) du premier composant (2) et le corps de masse (5) pouvant être fixé au niveau d'une surface de montage du deuxième composant (3) et la section de fixation (14) et le corps de masse (5) étant préajustés dans un état préparé pour le montage final et étant reliés l'un à l'autre de façon amovible, afin que la tête de palpage (12) remplisse sans effleurement le corps de masse (5) après desserrement de cette liaison à l'état monté fini, au moins un moyen (16) activable par le biais d'une force étant disposé au niveau de la section de fixation (14) pour chevaucher une éventuelle fente (21) se produisant entre la section de fixation (14) d'une part et la surface en saillie (24) associée du premier composant (2) d'autre part, **caractérisé en ce que** le moyen (16) comporte un dispositif (29, 31) de limitation de la force d'activation.

2. Élément de capteur selon la revendication 1, **caractérisé en ce que** le dispositif (29, 31) est bloqué après activation pour empêcher tout détachement du moyen (16).

3. Élément de capteur selon la revendication 1 ou 2, **caractérisé en ce que** le moyen comporte un élément de maintien (16) pouvant être sorti par le biais de la force d'activation interagissant avec un élément de traction (22) agissant de façon opposée à la direction de sortie afin de fixer la section de fixation (14).

4. Élément de capteur selon la revendication 3, avec un élément de maintien (16) comportant une section de tige (25) pour le chevauchement de fente et une section de tête (26) pour l'application de la force d'activation, **caractérisé en ce qu'**un couplage de débrayage (29, 31) est disposé entre la section de tige (25) et la section de tête (26) sous la forme d'un dispositif de limitation de la force d'activation.

5. Élément de capteur selon la revendication 4, **caractérisé par** la présence d'une vis (16) prenant la forme d'un élément de maintien pouvant être sorti et pourvu d'une tête de vis (26) servant de section de tête, d'une tige de vis (25) servant de section de tige et d'un couplage de débrayage (29, 31) servant à la limitation du couple de rotation.

6. Élément de capteur selon la revendication 5, **caractérisé en ce que** soit la tête de vis (26) soit la tige de vis comporte dans une direction longitudinale de vis des mâchoires sur ressort (31) saillantes reposant soit dans la tige de vis (25) soit dans la tête de vis par complémentarité de frottements contre les surfaces intérieures d'enveloppe (30) d'un alésage cylindrique (29).

7. Élément de capteur selon la revendication 3, avec un élément de maintien (16) comportant une section de tige (25) servant au chevauchement de fente et une section de tête (26) pour l'application de la force d'activation, **caractérisé en ce qu'**un ressort de torsion ou un ressort de traction et/ou de pression ou un point de rupture théorique est disposé entre la section de tige et la section de tête pour servir de dispositif de limitation de la force d'activation.

8. Élément de capteur selon la revendication 6 ou 7, **caractérisé en ce que** la tête de vis (26) comporte une longueur de vis limitée pour simplifier le montage.

9. Élément de capteur selon l'une quelconque des revendications 2 à 9, **caractérisé en ce que** plusieurs éléments de maintien (16) forment ensemble un appui à trois points pour définir un positionnement exact de la section de fixation (14) au niveau de la surface en saillie (24).

10. Procédé de fixation d'un système de mesure (1) servant à la détection d'un mouvement d'un premier composant (3) par rapport à un deuxième composant (3), comprenant une tête de palpage (12) et un corps de masse (5) en étant rempli, lesdits éléments étant préajustés dans un état préparé et étant reliés l'un à l'autre de façon amovible, le corps de masse (5) étant d'abord fixé à une surface de montage du premier composant (2) pour réaliser le montage final puis la tête de palpage (12) étant fixée au niveau d'une surface en saillie (24) du deuxième composant (3) avant que le préajustement soit retiré, au moins un moyen activable par le biais d'une force étant d'abord activé au niveau de la surface en saillie (24) avant la fixation du système de mesure (1) pour chevaucher une fente située entre le système de mesure (1) et le deuxième composant (3) et le système de mesure (1) étant ensuite fixé au niveau du deuxième composant (3) en conservant la fente (21) chevauchée, **caractérisé en ce que** l'activation du moyen est soumise à une limitation de la force d'activation.

11. Procédé selon la revendication 10, **caractérisé en ce que** la tête de palpage (12) est serrée avec le premier composant (2) après l'activation du moyen (16) par application durable d'une force de traction, le moyen activé par application d'une force soutenant la tête de palpage (12).
